# EUROPEAN PATENT SPECIFICATION

(11) **EP 1 695 841 B1**
(45) Date of publication and mention of the grant of the patent: **23.01.2008**
(21) Application number: 05004349.6
(22) Date of filing: 28.02.2005
(51) Int. Cl.: B60B 27/02

(54) **Bicycle hub transmission cover**
Abdeckung für eine Fahrradnabenschalteinrichtung
Couvercle pour l'ensemble de moyeu et transmission d'une bicyclette

(43) Date of publication of application: 30.08.2006
(73) Proprietor: SHIMANO INC., Osaka 590-8577 (JP)
(72) Inventor: Hino, Tetsuya, Yamaguchi, 750-1137 (JP); Ito, Minoru, Toyoura Yamaguchi, 750-0321 (JP)
(74) Representative: Hofmann, Harald

(56) References cited:
- EP-A- 1 040 993
- DE-U1- 20 101 377
- US-B1- 6 322 155

## Description

### BACKGROUND OF THE INVENTION

The present invention is directed to internal bicycle hub transmissions and, more particularly, to an internal hub transmission which uses a sealing assembly that rotates with the hub shell.

Bicycles, particularly recreational bicycles referred to as city cruisers, are inexpensive and are easy to ride, and are thus widely used to commute to work or school or for shopping. With this type of recreational bicycle, an internal hub transmission is sometimes mounted at the rear wheel in order to ride at high speeds over flat terrain or to ride uphill with minimal exertion.

An internal hub transmission generally comprises a hub axle that is fixed to the bicycle frame; a hub shell that is able to rotate around the hub axle; a driving member for receiving a driving force from the drive chain; a planet gear mechanism that is housed in the hub shell for transmitting the driving force from the driving member to the hub shell through a plurality of transmission paths; and a clutch mechanism for selecting among the plurality of transmission paths. The clutch mechanism has a clutch member for switching the drive transmission path by moving in the direction of the hub axis, and a push rod that presses the clutch member.

Because the driving member and hub shell are capable of rotation relative to each other, there is a space between the two which creates a risk that water, dirt and other contaminants may enter the inside of the hub shell and adversely affect the operation of the planet gear mechanism and other components. Some internal hub transmissions use a labyrinth-type sealing mechanism to inhibit entry of contaminants into the hub shell. However, since such a system relies on staggered barrier walls with spaces between the barrier walls, there is still a risk that contaminants can migrate between the barrier walls and enter the inside of the hub shell, especially if the hub is immersed in water. Other internal transmission hubs use a rubber seal mounted to an inner peripheral surface of an annular metal ring, which, in turn, is press-fit onto the inner peripheral surface of the hub shell. While such a sealing mechanism is effective, the rubber seal inevitably becomes worn as a result of the sliding contact with the driving member as the hub rotates relative to the driving member. Because the annular ring containing the rubber seal is press-fit onto the inner peripheral surface of the hub shell, removal of the old seal and installation of a new seal is very difficult. Finally, there are covers for a bicycle transmission including an annular housing and an annular seal member, wherein the housing includes a side wall that defines a plurality of circumferentially disposed slots, and the seal member is retained within the housing and extends radially inwardly, and wherein the seal member is formed from a resilient material, and the housing is formed from a material that is more rigid than the seal member. Such an arrangement allows easy removal and replacement of the cover, and can for example be taken from EP 1040993.

Experience has shown, however, that even with the latter mentioned type of seal for a bicycle hub transmission, entry of contaminants into the hub can only be prevented in part, with dust particles still able to make their way through the various interfaces between the seal and the relevant parts of the hub transmission. Accordingly, there is a need for further enhancement of this type of seal to obtain a more reliable and effective sealing of the hub transmission from contaminants.

This problem is solved by means of the features as contained in patent claim 1, while preferred embodiments are described in the claims depending therefrom.

According to the present invention a cover for a bicycle hub transmission is provided, comprising a substantially cup-shaped annular housing, provided with a centrally located driving member opening in its bottom, to allow the of the transmission to pass through, and a separate, annular seal member, removably retained on the rim of the opening, wherein the rim of the cup-shaped seal is provided with either inwardly or outwardly projecting protuberances for engagement with corresponding openings or grooves on the hub transmission. The seal as such is characterized in that the seal retained on the rim of the central opening is provided with an enforcement element, and in that on the outer circumferential surface of the cup-shape, another separate annular seal is provided, capable of elastically wedging the rim of the cup-shaped cover into a corresponding annular groove on the hub transmission.

By means of the features as provided according to the invention, a cover for a hub transmission in a bicycle can be provided that effectively prohibits contaminants from entering the hub transmission, as in contrast to prior art means, the rim of the cup-shaped cover, besides coming into engagement with corresponding means on the hub transmission to removably hold it in place, is wedged tightly into the corresponding annular groove or openings on the hub transmission so that contaminants can be kept from working its way through the engagement portions of the cover and the hub transmission, respectively, and as by providing an enforcement element in the separate annular seal retained on the rim of the central opening a reliable, yet still elastic abutment of the seal against the corresponding contact surface of the respective part of the hub transmission can be guaranteed, so that entry of contaminants at this point can be effectively prohibited too. Furthermore, by providing the annular seal on the outer circumferential surface of the cup-shaped hub transmission cover, the inner protuberances at the rim of the cup shaped cover can be kept very small, as engagement with corresponding openings in the respective parts of the hub transmission is guaranteed by the annular seal on the outer circumferential surface of the cover, forcing the protuberances into the openings.

In a more specific embodiment of the hub transmission cover, the bottom of the cup-shaped cover extends slightly over the circumferential wall of the cover, so that through the intersection of the two a circumferential seat is formed for receiving the separate, circumferential seal and keep it in a defined position with respect to the cup-shaped cover.

Furthermore, the rim of the central opening in the bottom of the cup-shaped cover can be provided with a circumferential flange forming a seat to receive the separate seal and thus provide it with a torque barrier, to keep the seal retained on the rim of the central opening from flexing away from its contact surface on the hub transmission under pressure and maintain the close contact required for an effective sealing.

When the hub transmission cover is applied to a bicycle hub, the bicycle hub includes a hub shell, which can be made of one integral piece or several functional pieces combined with each other, capable of rotating around a hub axis, wherein the hub shell can have at least one of a circumferential hub coupling projection, a substantially radially extending circumferential hub coupling groove, and a wedging groove, extending perpendicularly to the coupling groove, wherein the coupling groove is formed in one of the inner side walls of the wedging groove; an inner member disposed coaxially with the hub shell, and a; a transmission for communicating a driving force to the hub shell through a plurality of transmission paths; and a cover with features as described above, wherein the hub coupling groove can have the form of distinct and circumferentially distributed openings with which the protuberances of the cover come into engagement, and wherein the circumferential wall of the cup-shaped cover has a cross section at least partially corresponding with that of the circumferential hub coupling projection to keep the cover in place.

Further characteristics and advantages can be taken from the enclosed figures, showing an embodiment of the present invention that is of purely exemplary nature and is by no means intended to limit the scope of protection in any way:
Figure 1 is a side view of a bicycle that incorporates a particular embodiment of an internal hub transmission and a cover according to the present invention ;
Figure 2 is a partial cross sectional view of a particular embodiment of an internal hub transmission and a cover according to the present invention;
Figure 3 is an enlarged detail view of the internal hub transmission of Figure 2;
Figure 4 is a cross sectional view of the annular seal retained on the rim of the central opening in the cover of Figure 2;
Figure 5 is a cross sectional view of the annular reinforcement member as contained in the seal of Figure 4;
Figure 6 is a frontal view of the cover according to Figure 2;
Figure 7 is a partly cross sectional view of the cover according to Figure 2 and 6; and
Figure 8 is a back view of the cover according to Figures 2, 6, and 7.

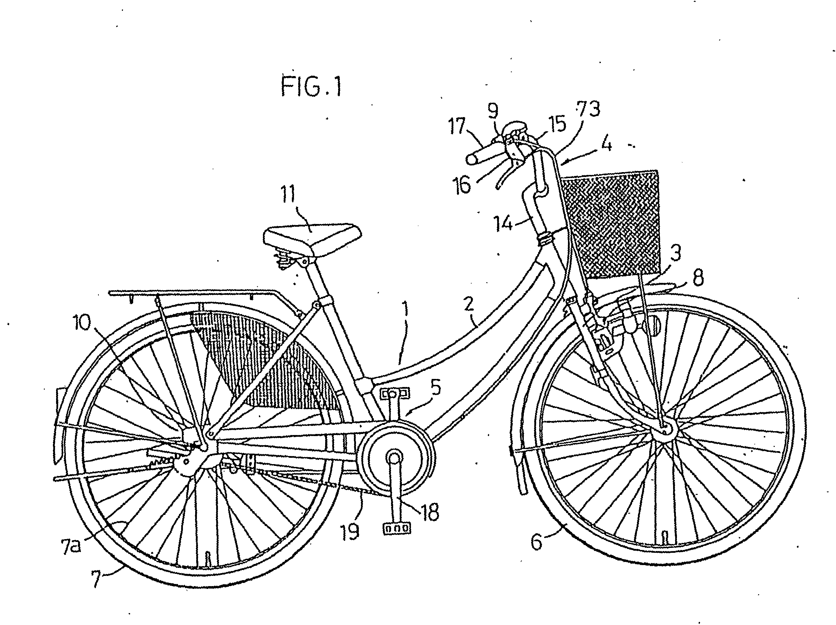

Figure 1 is a side view of a bicycle that incorporates a particular embodiment of an internal hub transmission according to the present invention. This bicycle is a recreational bicycle which comprises a frame 1 having a double-loop type of frame body 2 and a front fork 3, a handle component 4, a drive component 5, a front wheel 6, a rear wheel 7 to which a three-speed internal hub transmission 10 has been mounted, a front braking apparatus 8, a gear shifter component 9 for operating the internal hub transmission 10 close at hand, and a saddle 11.

The handle component 4 has a handle stem 14 fixed to the upper portion of the front fork 3 and a handlebar 15 fixed to handle stem 14. A brake lever 16, which constitutes part of the front brake apparatus 8, a grip 17, and the gear shifter component 9 are mounted at the right end of the handlebar 15. The gear shifter component 9 is mounted on the brake lever 16 on the inside of the brake lever 16, and it is linked with internal hub transmission 10 by means of a shift control cable comprising an inner cable and an outer casing formed by a spiral outer cable. The gear shifter component 9 has an ordinary structure having a winding lever for winding the inner cable and a release lever that releases the winding operation of the winding lever and plays out the inner cable, and as such it will not be described in detail herein. The drive component 5 has a gear crank 18 that is provided to the lower portion (bottom bracket portion) of the frame body 2, a chain 19 that goes around the gear crank 18, and the internal hub transmission 10.

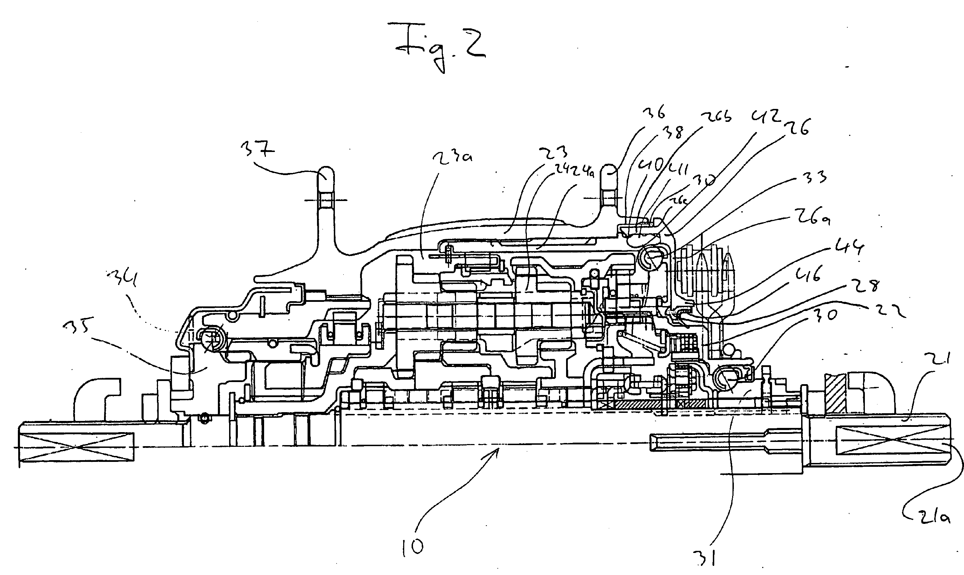

As shown in Figure 2, internal hub transmission 10 has a hub axle 21 fixed to the rear dropout 2a of the frame body 2 of the bicycle, a driving member 22 disposed around the outer periphery at one end of the hub axle 21, a hub shell 23 disposed further around the outer periphery of the hub axle 21 and the driving member 22, a planet gear mechanism 24, and a cup-shaped cover 26 for the hub transmission, with an inner annular seal 28, and an outer annular seal 30.

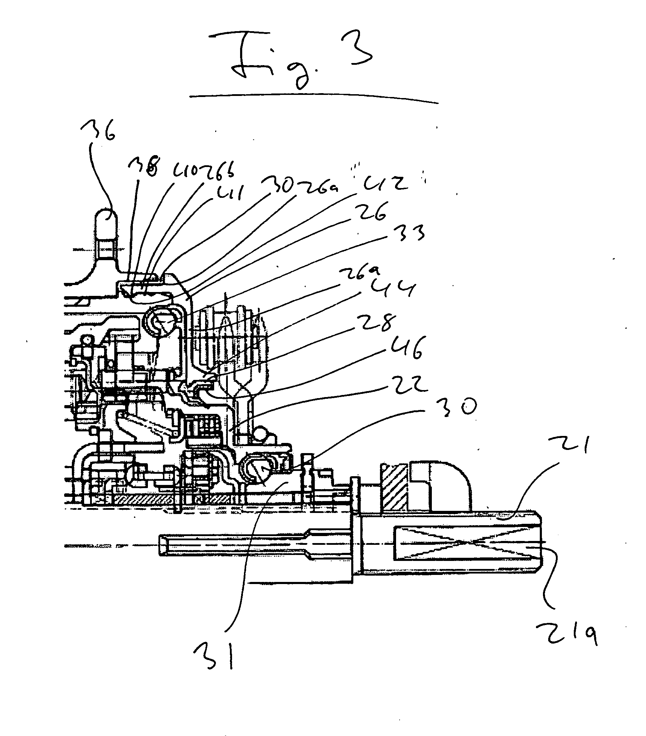

As shown in Figures 2 and 3, the hub axle 21 is a rod-like member which has a larger diameter in its middle and a smaller diameter at both ends. Threads are formed at both ends of hub axle 21. An operation hole 21a is formed in the axial portion of the hub axle 21 from the right end to the center in Figure 2.

One end of the driving member 22 is rotatably supported on the hub axle 21 via balls 30 and a hub cone 31. The hub shell 23 is a tubular member, and a housing space 23a around the inner periphery thereof houses the driving member 22 and the planet gear mechanism 24. The hub shell 23 is able to rotate around the hub axle 21 via balls 33 and 34 and a hub bearing cone 35. Integrally formed Flanges 36 and 37 for supporting spokes 7a (see Figure 1) are fixed at both ends of the outer periphery of the hub shell 23. The cup-shaped hub transmission cover 26 disposed on the right side of internal hub transmission 10, comprising an inner annular seal member 28, contacting driving member 22, and an outer annular seal 30, contacting the inner wall of an annular groove 38 formed between the hub shell 23, and an outer part of the hub transmission 24, wedging protuberances 40 at the rim of the cup shaped cover 26 into engagement with annular groove 42. As can be taken in particular from Fig. 3, due to the outer seal 30, the protuberances 40 can be kept minimal, so that application and removal of the cover 26 is extremely easy, while a tight and reliable fit of the cover 26 can be guaranteed at the same time keeping contaminants from entering the inside of the hub transmission along this interface. As can furthermore be seen in Fig. 2 and 3, the bottom 26a of the cover in a slight angle extends well beyond the outer circumferential wall 26b of the cover, forming a seat 26c receiving the seal 30 to keep it in place when it is wedged in groove 38.

The rim of the central opening in the bottom of the cup-shaped cover 26 in the preferred embodiment shown in Figures 2 and 3 is provided with a circumferential flange 44 forming a seat to receive the inner annual seal 28 and thus provide it with a torque barrier, to keep the seal 28 retained on the rim of the central opening from flexing away from its contact surface on the driving member 22 under pressure and maintain the close contact between seal 28 and the contact surface on the driving member 22 required for effective sealing. As can finally be seen in Figures 2 and 3, the inner annular seal 28 is provided with an embedded reinforcement element 46, which in the present case is made of steel, but could be made of any other material with appropriate material characteristics. Preferably, the cover 26 as such is made of a more rigid material than the inner and outer seal 28, and 30.

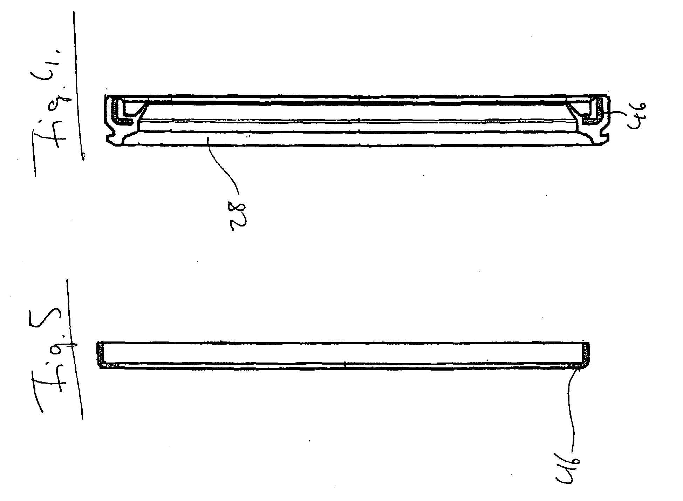

In Figure 4, the inner seal 28 is shown in more detail again and in a full cross section. As can be taken from Figure 4, a version of the inner seal 28 is shown, in which the enforcement element 46, which is shown alone in Figure 5, is fully embedded into the seal 28, while in the version as shown in Figures 2 and 3, the enforcement element 46 is located at the surface of the inner contour of the seal 28. Embedding the enforcement element fully into the material can be advantageous, as it is not exposed to the environment, and thus protected from fatigue due to oxidation, heat, dirt, etc. so that the rigidity, and thus the supporting function of the enforcement element can be maintained over a long time and regardless of the conditions of use.

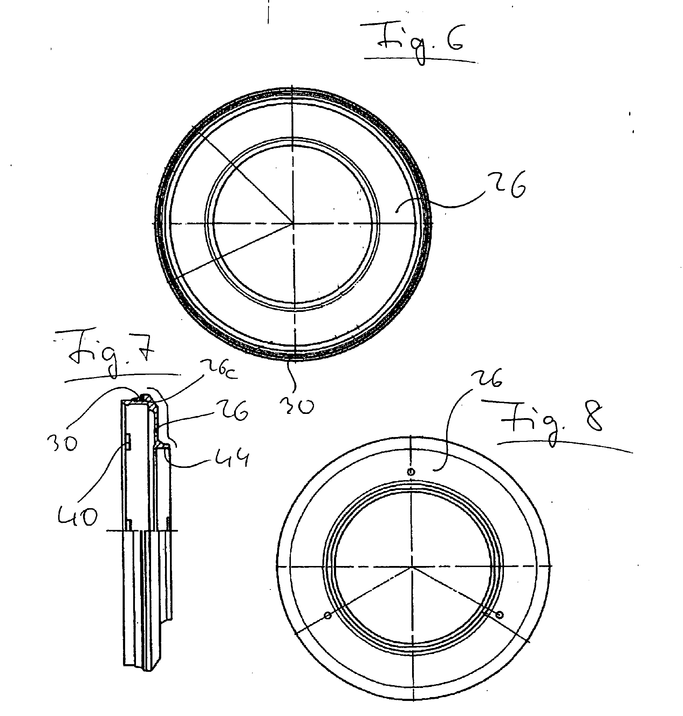

Figures 6, 7, and 8 show the cover 26 in a front, a partly cross sectional, and a back view, together with the outer seal 30 applied to the circumference of the housing of the cover 26. What can be taken in particular from Figure 6, is the distribution and form of protuberances 40 on the inner rim of the cover housing, projecting only slightly radially to the inside of the rim.

Considering all of the above, a cover for a bicycle hub transmission can be provided that effectively prohibits contaminants from entering the inside of the hub transmission, so that a reliable function of the hub transmission can be maintained over a long period of time. At the same time, the cover according to the invention is easy to apply and remove.

## Claims

1. A cover (26) for a bicycle hub transmission comprising ,
a substantially cup-shaped annular housing, provided with a centrally located driving member opening in its base, and
a separate, inner annular seal (28), removably retained on the rim of said opening, the rim of the cup-shaped housing being provided with at least two radially projecting protuberances (40) for engagement with corresponding openings or grooves (42) on an outer part of the hub transmission (24) or on a hub shell (23),
**characterized in that** substantially opposite the protuberances (40), an outer annular seal (30) is provided on the annular housing, for wedging into a corresponding annular groove (38) on hub shell (23) or an outer part of the hub transmission (24).

2. The cover according to claim 1, **characterized in that** the protuberances (40) project radially inwardly, and **in that** the outer annular seal (30) is provided on the outer circumference of the annular housing.

3. The cover according to claim 1 or 2, **characterized in that** the base of the housing radially extends over the circumference of the annular housing, forming a seat (26c) for receiving the outer annular seal (30) and keep in place.

4. The cover according to any of the preceding claims, **characterized in that** the inner annular seal (28) retained on the rim of the central opening is provided with an enforcement element (46).

5. The cover according to claim 4, **characterized in that** the enforcement element (46) is embedded into the inner annular seal (28).

6. The cover according to any of claims 4 or 5, **characterized in that** the enforcement element (46) has an annular flange and an outer circumferential wall, perpendicular thereto.

7. The cover according to any of the preceding claims, **characterized in that** the central opening in the base of the cup-shaped cover (26) is provided with a circumferential flange (44) forming a seat, acting as a torque barrier for receiving the inner annular seal (28).

8. A bicycle hub, with a hub shell (23) capable of rotating around a hub axis (21), an inner member (24a) disposed coaxially with the hub shell (23), and a transmission for communicating a driving force to the hub shell (23) through a plurality of transmission paths, wherein the hub shell (23) and/or the inner member (24a) has at least one of a circumferential hub coupling projection (41), and a substantially radially extending circumferential hub coupling groove (42), **characterized in that** furthermore a wedging groove (38) is provided, extending perpendicularly to the coupling groove (42), and a cover (26) according to any of claims 1 to 7, wherein the coupling groove (42) is formed in one of the inner side walls of the wedging groove (38), and wherein the coupling (42) and wedging groove (38) are adapted to receive the rim of the annular housing of the cover (26).

9. The bicycle hub according to claim 8, **characterized in that** the hub coupling groove (42) has the form of distinct and circumferentially distributed openings corresponding with the number of protuberances (40) on the housing rim of the cover (26).

10. The bicycle hub according to claim 8 or 9, **characterized in that** the circumferential wall of the cup-shaped cover (26) has an inner contour at least partially corresponding with that of the circumferential hub coupling projection (41) and groove (42).

## Patentansprüche

1. Abdeckung (26) für eine Fahrradnabenübertragung, umfassend:
Ein im Wesentlichen becherförmiges, ringförmiges Gehäuse, bereitgestellt mit einer mittig befindlichen Antriebselementöffnung in seiner Basis, und
eine separate innere ringförmige Dichtung (28), entfernbar gehalten am Rand der Öffnung, wobei der Rand des becherförmigen Gehäuses mit zumindest zwei radial vorspringenden Ausstülpungen (40) zum Eingriff mit entsprechenden Öffnungen oder Nuten (52) an einem äußeren Abschnitt der Nabenübertragung (24) oder an einer Nabenhülse (23) bereitgestellt ist, **dadurch gekennzeichnet, dass** im Wesentlichen gegenüberstehend den Ausstülpungen (40) eine äußere ringförmige Dichtung (30) an dem ringförmigen Gehäuse bereitgestellt ist, zum Verklemmen in eine entsprechende ringförmige Nut (38) an der Nabenhülse (23) oder an einem äußeren Abschnitt der Nabenübertragung (24).

2. Abdeckung gemäß Anspruch 1, **dadurch gekennzeichnet, dass** die Ausstülpungen (40) radial nach innen vorragen und dadurch, dass die äußere ringförmige Dichtung (30) an dem äußeren Umfang des ringförmigen Gehäuses bereitgestellt ist.

3. Abdeckung gemäß Anspruch 1 oder 2, **dadurch gekennzeichnet, dass** die Basis des Gehäuses sich radial über den Umfang des ringförmigen Gehäuses erstreckt, ausbildend einen Sitz (26c) zur Aufnahme der äußeren ringförmigen Dichtung (30) und platziert halten.

4. Abdeckung gemäß einem der vorangehenden Ansprüche, **dadurch gekennzeichnet, dass** die innere ringförmige Dichtung (28), die an dem Rand der mittigen Öffnung gehalten ist, mit einem Verstärkungselement (46) bereitgestellt ist.

5. Abdeckung gemäß Anspruch 4, **dadurch gekennzeichnet, dass** das Verstärkungselement (46) in die innere ringförmige Dichtung (28) eingebettet ist.

6. Abdeckung gemäß einem der Ansprüche 4 oder 5, **dadurch gekennzeichnet, dass** das Verstärkungselement (46) einen ringförmigen Flansch an einer äußeren Umfangswand aufweist, senkrecht dazu.

7. Abdeckung gemäß einem der vorhergehenden Ansprüche, **dadurch gekennzeichnet, dass** die Mittelöffnung in der Basis der becherförmigen Abdeckung (26) mit einem Umfangsflansch (44) bereitgestellt ist, ausbildend einen Sitz, wirkend als eine Drehmomentensperre zur Aufnahme der inneren ringförmigen Dichtung (28).

8. Fahrradnabe mit einer Nabenhülse (23), die um eine Nabenachse (21) rotieren kann, einen Innenteil (24a), koaxial mit der Nabenhülse (23) angeordnet, und einer Übertragung zum Kommunizieren einer Antriebskraft auf die Nabenhülse (23) durch eine Vielzahl von Übertragungspfaden, wobei die Nabenhülse (23) und/oder das Innenteil (24a) zumindest einen aus einem Umfangsnaben-Kopplungsvorsprung (41) und einer sich im Wesentlichen radial erstreckenden Umfangsnaben-Kopplungsnut (42) aufweist, **dadurch gekennzeichnet, dass** ferner eine Klemm-Nut (38) bereitgestellt ist, die sich senkrecht zu der Kopplungsnut (42) und einer Abdeckung gemäß einem der Ansprüche 1 bis 7 erstreckt, wobei die Kopplungsnut (42) in einer der Innenseitenwände der Klemm-Nut (38) ausgebildet ist und wobei die Kopplung (42) und die Klemm-Nut (38) angepasst sind, den Rand des ringförmigen Gehäuses der Abdeckung (26) aufzunehmen.

9. Fahrradnabe gemäß Anspruch 8, **dadurch gekennzeichnet, dass** die Nabenkopplungsnut (42) die Form von ausgeprägten und in Umfangsrichtung verteilten Öffnungen aufweist, die der Anzahl der Ausstülpungen (40) an dem Gehäuserand der Abdeckung (26) entsprechen.

10. Fahrradnabe gemäß Anspruch 8 oder 9, **dadurch gekennzeichnet, dass** die Umfangswand der becherförmigen Abdeckung (26) eine innere Kontur aufweist, die zumindest teilweise derjenigen des Umfangsnaben-Kopplungsvorsprungs (41) und der Nut (42) entspricht.

## Revendications

1. Elément de couverture (26) pour une transmission de moyeu de bicyclette comprenant:
- un boîtier annulaire sensiblement en forme de coupe, comprenant une ouverture pour un organe d'entraînement située de manière centrale dans sa base, et
- un joint annulaire interne (28), séparé, retenu amovible sur la jante de ladite ouverture, la jante du boîtier en forme de coupe étant muni d'au moins deux protubérances (40) projetant radialement, pour un engagement avec des ouvertures ou rainures (42) correspondantes sur une partie externe de la transmission de moyeu (24) ou sur un carter de moyeu (23), **caractérisé en ce que**, essentiellement à l'opposé des protubérances (40), un joint annulaire externe (30) est fourni sur le boîtier annulaire, pour se caler dans une rainure annulaire correspondante (38) sur le carter de moyeu (23) ou sur une partie externe de la transmission de moyeu (24).

2. Dispositif de couverture selon la revendication 1, **caractérisé en ce que** les protubérances (40) projettent radialement vers l'intérieur, et **en ce que** le joint annulaire externe (30) est fourni sur la circonférence externe du boîtier annulaire.

3. Dispositif de couverture selon la revendication 1 ou 2, **caractérisé en ce que** la base du boîtier s'étend radialement au-dessus de la circonférence du boîtier annulaire, formant un logement (26c) de réception du joint annulaire externe (30) pour le laisser en place.

4. Elément de couverture selon l'une quelconque des revendications précédentes, **caractérisé en ce que** le joint annulaire interne (28) retenu sur la jante de l'ouverture centrale est muni d'un élément de renfort (46).

5. Elément de couverture selon la revendication 4, **caractérisé en ce que** l'élément de renfort (46) est inclus à l'intérieur du joint annulaire interne (28).

6. Elément de couverture selon l'une quelconque des revendications 4 ou 5, **caractérisé en ce que** l'élément de renfort (46) a un flan annulaire et une paroi circonférentielle externe, qui y est perpendiculaire.

7. Elément de couverture selon l'une quelconque des revendications précédentes, **caractérisé en ce que** l'ouverture centrale dans la base de l'élément de couverture en forme de coupe (26) est munie d'un flanc circonférentiel (44) formant un logement, agissant en tant que barrière de couple pour recevoir le joint annulaire interne (28).

8. Moyeu de bicyclette, avec un carter de bicyclette (23) capable de tourner autour d'un axe de moyeu (21), un organe interne (24a) disposé de manière coaxial au carter de moyeu (23), et une transmission pour communiquer une force d'entraînement au carter de moyeu (23) par l'intermédiaire d'une pluralité de chemins de transmission, dans lequel le carter de moyeu (23) et/ou l'organe interne (24a) a au moins une d'une projection de couplage de moyeu circonférentielle (41) et d'une rainure de couplage (42) de moyeu circonférentiel s'étendant sensiblement radialement, **caractérisé en ce que** une rainure de calage (38) est en outre fournie, qui s'étend perpendiculairement à la rainure de couplage (42) et un élément de couverture (26) selon l'une quelconque des revendications 1 à 7, dans lequel la rainure de couplage (42) est formée dans l'une des parois latérales internes de la rainure de calage (38), et dans lequel la rainure de couplage (42) et la rainure de calage (38) sont adaptées pour recevoir la jante du boîtier annulaire de l'élément de couverture (26).

9. Moyeu de bicyclette selon la revendication 8, **caractérisé en ce que** la rainure de couplage de moyeu (42) a la forme d'ouvertures distribuées de manière circonférentielle et distincte, correspondant avec le nombre de protubérances (40) sur la jante de boîtier de l'élément de couverture (26).

10. Moyeu de bicyclette selon la revendication 8 ou 9, **caractérisé en ce que** la paroi circonférentielle de l'élément de couverture (26) en forme de coupe a un contour interne correspondant au moins partiellement avec celui de la projection de couplage de moyeu circonférentiel (41) et de la rainure (42).
